# EUROPÄISCHE PATENTSCHRIFT

(11) **EP 1 985 867 B1**
(45) Veröffentlichungstag und Bekanntmachung des Hinweises auf die Patenterteilung: **21.10.2009**
(21) Anmeldenummer: 07008707.7
(22) Anmeldetag: 27.04.2007
(51) Int. Cl.: F15B 11/044

(54) **Elektrohydraulische Verstellvorrichtung für einen Solarpaneel-Träger**
Electrohydraulic adjusting device for a solar panel carrier
Dispositif de réglage électrohydraulique pour un support de panneau solaire

(43) Veröffentlichungstag der Anmeldung: 29.10.2008
(73) Patentinhaber: HAWE Hydraulik SE, 81673 München (DE)
(72) Erfinder: Heusser, Martin, Dipl.-Ing., 81245 München (DE); Hundschell, Hilarius, 84424 Isen (DE); Neumair, Georg, 85402 Thalhausen (DE)
(74) Vertreter: Grünecker, Kinkeldey, Stockmair & Schwanhäusser Anwaltssozietät

(56) Entgegenhaltungen:
- EP-A2- 0 803 630
- DE-A1- 10 022 236

## Beschreibung

Die Erfindung betrifft eine elektrohydraulische Verstellvorrichtung gemäß Oberbegriff des Patentanspruchs 1.

In der Solarenergietechnologie ist es bekannt, in einem Solarkraftwerk beispielsweise viele Solarpaneele in festen Positionen zu installieren. Die feste Positionierung stellt natürlich nur einen Kompromiss dar, da sich der Sonnenstand während einen Sonnentags relativ zu den fest positionierten Solarpaneelen ändert. Um die Energieausbeute zu optimieren, ist es deshalb bekannt geworden, jedes Solarpaneel mittels einer elektrohydraulischen Verstellvorrichtung der Sonne nachzuführen. Der Einsatz an Primärenergie für die elektrohydraulische Verstellvorrichtung sollte natürlich geringer sein als die durch die Nachführung erzielbare Energieausbeute. Aus dieser Forderung ergeben sich relativ hohe Ansprüche an die elektrohydraulische Verstellvorrichtung, was den Strombedarf bzw. Stromverbrauch elektrischer Vorrichtungskomponenten betrifft. Eine weitere, wichtige Anforderung ergibt sich aus der Notwendigkeit, selbst bei einem Stromausfall, oder in der Nacht, d. h. jederzeit den Träger in die Schutzposition verstellen zu können, beispielsweise bei Sturm- oder Starkwindgefahr, um Schäden an dem Solarpaneel bzw. der Verstellvorrichtung zu vermeiden. Um diese Anforderung zu erfüllen, ist es in der Praxis bekannt geworden, eine eigenständige Stromquelle, z. B. eine Autobatterie, vorzusehen, mit der das Motorpumpenaggregat und elektrische Komponenten der Verstellvorrichtung auch bei einem Stromausfall netzunabhängig betätigbar sind, um die Schutzposition einzustellen. An sich ist die Konstruktion des Solarpaneels mit seinem Unterbau so gewählt, dass die Gewichtslast des Solarpaneels mit dem Träger am Unterbau eine permanente Kraft in Richtung zur Schutzposition erzeugt, die nutzbar ist, um auch bei einem Stromausfall die Schutzposition auch ohne die Betätigung von auf die Stromversorgung angewiesenen Komponenten der Verstellvorrichtung einzustellen. Dies bedingt aber eine Verlagerung vom Hydraulikmedium zwischen den Kammern des Kipp-Hydromotors, und ggf. ein Nachsaugen von Hydraulikmedium aus dem Motorpumpenaggregat, was sich wegen der langen Verbindungsleitungen in der Praxis bisher nicht zufriedenstellend bewerkstelligen ließ. Bei dieser Umverteilung des Hydraulikmediums zwischen den Kammern des Kipp-Hydromotors entstehen nicht mehr eindeutige hydraulische Verhältnisse, die es außerordentlich erschweren, die Verstellvorrichtung nach Beseitigung der Ursache des Stromausfalls wieder ordnungsgemäß zu betätigen.

Bei einer aus EP-A-0 803 630 bekannten hydraulischen Betätigungsanordnung für eine Abdeckklappe an einem Fahrzeug ist bei einer Ausführungsform die Abdeckklappe bei unbestromtem Sitzventil und nicht laufender Pumpe nur durch ihr Eigengewicht bis in eine definierte Stellung absenkbar, wobei eine Drosselstelle die Absenkbewegung der Abdeckklappe bremst. Die Drosselstelle lässt Feinabstimmungen der Bewegungsgeschwindigkeit der Abdeckklappe zu. Eine Verstellung der Abdeckklappe unter ihrem Eigengewicht erfolgt jedoch erst dann, wenn der Begrenzungsdruck eines vorgespannten Notventils überwunden wird, was ein schnelles und sicheres Verstellen der Abdeckklappe erschwert.

Aus DE-A-100 22 236 ist ein mechanisch/hydraulisches Verstellsystem für zweiachsig dem Sonnenstand nachgeführte Solargeneratoren bekannt. Zwischen den Wegeventilen der Hydromotoren und der Druckquelle bzw. dem Tank sind wechselseitig hydraulisch entsperrbare Lasthalteventile vorgesehen. Der die Pumpe treibende Gleichstrommotor entnimmt sein Energie dem Solargenerator. Zur Aktivierung eines Bremssystems ist in einem Entlastungsstrang zum Tank ein Wegeventil enthalten.

Der Erfindung liegt die Aufgabe zugrunde, eine leistungsarm betreibbare elektrohydraulische Verstellvorrichtung der eingangsgenannten Art anzugeben, bei der bei einem Stromausfall oder einer bewussten Stromabschaltung die Schutzposition des Trägers eingestellt wird, und dennoch für den späteren Normalbetrieb der Verstellvorrichtung eindeutige hydraulische Verhältnisse sichergestellt bleiben.

Die gestellte Aufgabe wird mit den Merkmalen des Patentanspruchs 1 gelöst.

Da die Nachsaugverbindung direkt in der Nähe des Kipp-Hydromotors angeordnet ist, und der Überwachungsmagnet bei einem Stromausfall oder einer gewollten Stromabschaltung automatisch diese Nachsaugverbindung in der Nähe des Kipp-Hydromotors freigibt, reicht die Gewichtslast des Trägers aus diesen trotz der Verdrängung von Hydraulikmedium relativ zügig und zuverlässig in die Schutzposition zu stellen. Im Normalbetrieb, d. h. solange Versorgungsstrom vorhanden ist, ist die Nachsaugverbindung blockiert, und lässt sich die Verstellvorrichtung mit geringer Leistung betreiben. Da die Verlagerung des Hydraulikmediums zwischen den Kammern des Kipp-Hydromotors bei einem Stromausfall oder eine Stromabschaltung unabhängig von langen Leitungen bis zum Motorpumpenaggregat ist, werden zuverlässig nicht eindeutige hydraulische Verhältnisse für die Wiederaufnahme des Normalbetriebs nach einem Stromausfall oder einer Stromabschaltung ausgeschlossen. Durch den Kunstgriff, den Überwachungsmagneten bei Normalbetrieb permanent bestromt zu lassen, und die Freigabe der Nachsaugverbindung bei Stromausfall oder Stromabschaltung zwangsweise vorzunehmen, ist die Verstellvorrichtung auch auf keine autarke Stromversorgung angewiesen, wodurch Kosten und Strukturen reduziert sind. Da der Überwachungsmagnet im Normalbetrieb keinerlei Einfluss auf die Betätigung der Verstellvorrichtung gewinnt, lässt sich die Verstellvorrichtung mit minimalem Einsatz an Primärenergie betreiben, wodurch auch die Forderung erfüllt ist, für die Nachführung des Solarpaneels entsprechend dem sich ändernden Sonnenstand weniger Primärenergie als die durch die Nachführung gesteigerte Ausbeute zu verbrauchen. Die Arbeitsleitungen zwischen dem Kipp-Hydromotor und den Sperr- oder Lasthalteventilen sind über einen Nachsaugweg miteinander verbunden, von dem eine die Sperr- oder Lasthalteventile umgehende Ablassleitung abzweigt. Im Nachsaugweg und in der Ablassleitung ist je ein aus dem Nachsaugweg bzw. der Ablassleitung druckvorgesteuertes Wegesitzventil angeordnet, das somit bei seiner Funktion keinen Strom verbraucht. Ein Vorsteuerkreis der beiden Wegesitzventile ist über einen Entlastungszweig an die Ablassleitung angeschlossen. In diesem Entlastungszweig ist ein Magnetsitzventil mit dem Überwachungsmagneten als Aktuator enthalten, so dass bei Stromabschaltung oder Stromausfall über den Überwachungsmagneten das Magnetsitzventil in die Durchgangsstellung geht und die Wegesitzventile aufsteuert. Da das Magnetsitzventil in dem Entlastungszweig nur eine sehr geringe Steuermenge zu verarbeiten braucht, kann es klein bauen und leicht betätigbar sein, wodurch erst ein Überwachungsmagnet mit einem extrem geringen Leistungsbedarf möglich wird. Bei einem Kipp-Hydromotor mit gleich großen Kammern könnte die Ablassleitung sogar entfallen. Hingegen hat die Ablassleitung bei einem Kipp-Hydromotor mit unterschiedlich großen Kammern die zusätzliche Funktion, verlagertes Druckmedium anteilsmäßig abzulassen, wenn die Schutzposition eingestellt wird.

Bei einer zweckmäßigen Ausführungsform hat der Übermachungsmagnet eine Leistungsaufnahme zwischen nur etwa 1,5 bis 6 Watt, vorzugsweise von etwa 3 Watt, und wird der Überwachungsmagnet im Normalbetrieb permanent bestromt. Dank dieser geringen Leistungsaufnahme fällt der Stromverbrauch des Überwachungsmagneten kaum ins Gewicht.

Wegen der Möglichkeit, über die Ablassleitung zumindest einen Teil des zwischen den Kammern verlagerten Hydraulikmediums abzulassen, kann der Kipp-Hydromotor ein Differenzialzylinder sein, dessen Kolbenstange in der Schutzposition bis auf Anschlag eingefahren ist, so dass die Schutzposition eine eindeutig formschlüssig oder kraftschlüssig definiert Endlage ist. Der Nachsaugweg wird in Nachsaugrichtung von der kolbenseitigen Kammer zur kolbenstangenseitigen Kammer freigegeben, so dass überwechselndes Hydraulikmedium die kolbenstangenseitige Kammer voll befüllt, ohne nicht eindeutige hydraulische Verhältnisse zu hinterlassen, und der überschüssige Teil des verlagerten Hydraulikmediums über die Ablassleitung zum Motorpumpenaggregat abgelassen werden kann. Der Kipp-Hydromotor in Form eines oder mehrerer Differenzialzylinder bietet ferner den Vorteil, dass aufgrund der unterschiedlichen Beaufschlagungsflächen am Kolben z. B. eine Ausfahrbewegung (Aufgeben der zuvor eingestellten Schutzposition) sofort ab Wiederaufnahme des Normalbetriebs erfolgt, selbst wenn zunächst in beiden Arbeitsleitungen Druckgleichheit herrschen sollte, ehe die Kipp-Steuerung voll einsetzt.

Im Hinblick auf nach einer Verstellung in die Schutzposition und der Wiederaufnahme des Normalbetriebs eindeutige hydraulische Verhältnisses ist es zweckmäßig, im Nachsaugweg und in der Ablassleitung jeweils ein zur kolbenseitigen Kammer sperrendes Rückschlagventil anzuordnen. Diese Rückschlagventile tragen dazu bei den Träger ggf. gegen Windlasten oder unvorhersehbare Kräfte hydraulisch zu blockieren.

Eine weitere wichtige Maßnahme ist ein Senkbremsventil in der Ablassleitung. Speziell im Falle eines Differenzialzylinders ist bei der Verlagerung des Hydraulikmediums von der kolbenseitige Kammer in die Kolbenstangenseitige Kammer ein Teilvolumen abzulassen. Durch das Senkbremsventil lässt sich nun die Geschwindigkeit der Verstellung in die Schutzposition präzise einstellen und halten. Es kann so eine überschnelle Verstellung vermieden werden können, die ggf. zu Beschädigungen führen würde.

Baulich einfach ist zumindest die Nachsaugverbindung mit dem Überwachungsmagneten in einen auch die Sperr- oder Lasthalteventile enthaltenden Ventilblock eingegliedert, der entweder direkt am Kipp-Hydromotor oder zumindest in unmittelbarer Nachbarschaft des Kipp-Hydromotors montiert ist, d. h. ggf. relativ weit entfernt von dem Motorpumpenaggregat. Diese Bauweise ist einfach und Platz sparend und sichert kurze Strömungswege vor allem für Hydraulikmedium, das beim Einstellen der Schutzposition zu bewegen ist.

Im Hinblick auf hohe Funktionssicherheit und nur minimalen Einsatz an Primärenergie ist in jedem Wegesitzventil im Nachsaugweg bzw. in der Ablassleitung ein vom Vorsteuerdruck aus dem Nachsaugweg bzw. der Ablassleitung in Öffnungsrichtung auf einer Aufsteuerseite und in Schließrichtung auf einer Schließsteuerseite, ggf. auf von einander verschieden großen Beaufschlagungsflächen, beaufschlagtes Schließglied vorgesehen. Vorzugsweise kann auch eine in Schließrichtung wirkende Ventilfeder vorgesehen sein, die aber nur relativ schwach zu sein braucht. Ferner ist zwischen dem Ansaugweg bzw. der Ablassleitung und der Schließsteuerseite des jeweiligen Wegesitzventils eine Drossel installiert. Die Schließsteuerseiten der Wegesitzventile sind an das von dem Überwachungsmagneten betätigbare Magnetsitzventil angeschlossen, das im Entlastungszweig sitzt und über diesen an eine Arbeitsleitung zum Motorpumpenaggregat angeschlossen ist. Die Durchlassgröße des Sitzventils im Entlastungszweig ist in der Durchgangsstellung größer ist als die Durchgangsgröße der jeweiligen Drossel, so dass das über die Drossel entstehende Druckgefälle nach einem Stromausfall oder einer Stromabschaltung das jeweilige Wegesitzventil zuverlässig und relativ schnell in die Durchgangstellung verstellt, um den Nachsaugweg und die Ablassleitung frei zu machen und die Schutzposition zügig einstellen zu lassen.

Die Durchgangsgröße der jeweiligen Drossel kann beispielsweise einer Bohrung von etwa 0,4 mm entsprechen, während die Durchgangsgröße des Sitzventils in der Durchgangsstellung einer Bohrung von etwa 0,7 bis 0,8 mm entsprechen sollte.

Da auch im Normalbetrieb der Verstellvorrichtung der Verbrauch an Primärenergie, d. h. elektrischer Energie, so gering sein sollte wie möglich, um die durch die Nachführung des Solarpaneels gesteigerte Ausbeute zu optimieren, ist es bei einer bevorzugten Ausführungsform wichtig, im Motorpumpenaggregat einen drehrichtungsumkehrbaren Elelektromotor und eine in beiden Drehrichtungen fördernde Pumpe vorzusehen, die somit sozusagen eine Richtungssteuerfunktion erfüllen, die ein magnetbetätigtes Richtungssteuerventil entbehrlich macht, und so den Stromverbrauch reduziert. Im Motorpumpenaggregat kann ferner ein Paar druckvorgesteuerter 213-Wegeventile, die ohne Primärenergieeinsatz arbeiten, und ein Paar Systemdruckbegrenzungsventile enthalten, die ebenfalls ohne Einsatz elektrischer Energie funktionieren. Das Motorpumpenaggregat sollte einerseits über einen Richtungssteuerschieber an die Kipp-Steuerung des Kipp-Hydromotors und andererseits an eine Drehsteuerung des Trägers angeschlossen sein, um wahlweise die erforderlichen Verstellimpulse zur Nachführung steuern zu können. Der Richtungswegeschieber verbraucht elektrische Energie, jedoch nur für einen Umschaltvorgang. Der Energieverbrauch des die Pumpe treibenden Motors ändert sich durch die Drehrichtungsumkehrbarkeit nicht nennenswert.

Insgesamt wird die Verstellvorrichtung so mit einem extrem geringen Einsatz an elektrischer Primärenergie betreibbar. Die Leistungsaufnahme des Magneten des Richtungswegeschiebers zum Umschalten zwischen einer Drehverstellung und einer Kipp-Verstellung beträgt nur etwa zwischen 5 und 10 Watt, vorzugsweise nur 8 Watt, wobei zweckmäßig der Richtungswegeschieber durch Federkraft in der Schaltstellung zur Betätigung der Kipp-Steuerung gehalten wird, und jeweils nur kurzzeitig unter Nutzen des Magneten in die Schaltstellung zum Betätigen der Drehsteuerung umgeschaltet wird. In der Summe resultiert aus den Verschaltungsprinzipien dieser Verstellvorrichtung eine außerordentlich günstige Energiebilanz.

In der Kipp-Steuerung sind zweckmäßig mehrere parallel geschaltete Kipp-Hydromotoren, insbesondere Differenzialzylinder vorgesehen, die an eine gemeinsame Kipp-Steuerung angeschlossen sind. Dadurch müssen ggf. Verwindungen des Trägers bzw. des Solarpaneels in Kauf genommen werden. Soll dies ausgeschlossen sein, dann können mehrere parallele Kipp-Hydromotoren, insbesondere Differenzialzylinder, vorgesehen werden, deren jeder eine eigene Kipp-Steuerung aufweist.

Damit die Sperr- oder Lasthalteventile bei ihrer Funktion nicht auf elektrische Energie angewiesen sind, sollte es sich zweckmäßig um Typen handeln, die gegen Federkraft aus der jeweils anderen Arbeitsleitung aufgesteuert werden, wenn im Normalbetrieb Hydraulikmedium aus einer Kammer des Kipp-Hydromotors zum Motorpumpenaggregat verdrängt werden muss. Bei einem Stromausfall, oder bei Nichtbetätigung der Verstellvorrichtung halten die Sperr- oder Lasthalteventile ihre Abstellung selbsttätig ein, um den Träger in der jeweils eingestellten Position hydraulisch zu blockieren. Im Drehantrieb kann zum gleichen Zweck eine hydraulisch lösbare, durch Federkraft einrückbare Bremsvorrichtung vorgesehen sein.

Ausführungsformen des Erfindungsgegenstandes werden anhand der Zeichnung erläutert. Es zeigen:
- Fig. 1: eine schematische Seitenansicht einer Solarpaneel-Einheit,
- Fig. 2: ein Blockschaltbild einer elektrohydraulischen Verstellvorrichtung für den Träger der Solarpaneel-Einheit, im drucklosen Zustand,
- Fig. 3: als vergrößertes Blockschaltbild eine Kipp-Steuerung entsprechend Fig. 2, und
- Fig. 4: eine Variante einer Kipp-Steuerung an Stelle der von Fig. 3.

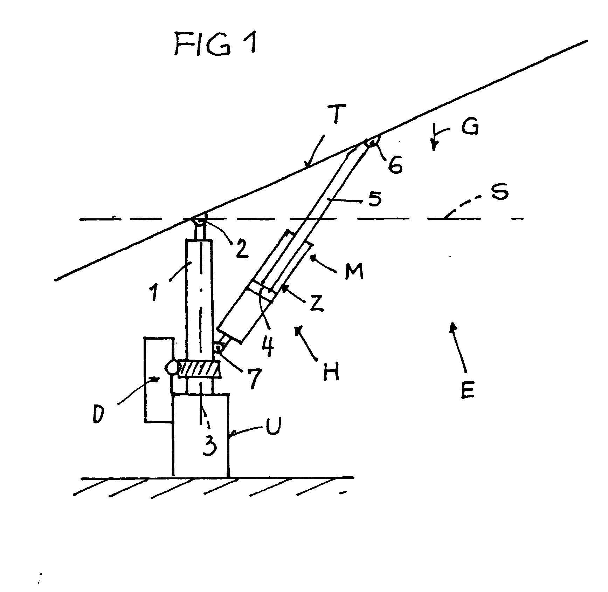

Eine Solarpaneel-Einheit gemäß Fig. 1 weist einen beispielsweise plattenförmigen Träger T für ein oder mehrere nicht gezeigte Solarpaneele auf, wie sie in einem Solarkraftwerk auf dem Erdboden oder auf Gebäudeflächen zu mehreren installiert sein können. Ein verankerter Unterbau U trägt eine um eine Achse 3 mittels eines Drehantriebs D drehbare Säule 1, an der in einer Lagerung 2 der Träger T kippbar und z. B. mittels der Säule 1 drehbar gelagert ist. Die Konstruktion ist so gewählt, dass der Träger T einseitig und so gelagert ist, dass er aus einer gezeigten, beispielsweise auf den Sonnenstand ausgerichteten Position (in ausgezogener Linie) unter seinem Eigengewicht durch die Gravitation G selbsttätig eine beispielsweise als horizontal gestrichelte Linie angedeutete Schutzposition S einzunehmen strebt. Die Schutzposition S wird beispielsweise als Passivposition bei Nichtbetrieb oder im Falle von Sturm- oder Starkwindgefahr eingestellt, um die Solarpaneel-Einheit gegen Schaden zu schützen.

Die Kipp-Steuerung des Trägers T weist zumindest einen Kipp-Hydromotor M auf, beispielsweise einen Differenzialzylinder Z mit einem Kolben 4 und einer Kolbenstange 5, die in einer weiteren Lagerung 6 am Träger T angelenkt ist. Abhängig von der Größe des Trägers T können mehrere Lagerungen 2, 6 und auch mehrere Kipp-Hydromotoren M vorgesehen sein, wobei die Kipp-Hydromotoren entweder gemeinsam eine Kipp-Steuerung ausführen, oder jeder Kipp-Hydromotor für sich mit einer solchen Kipp-Steuerung ausgestattet ist.

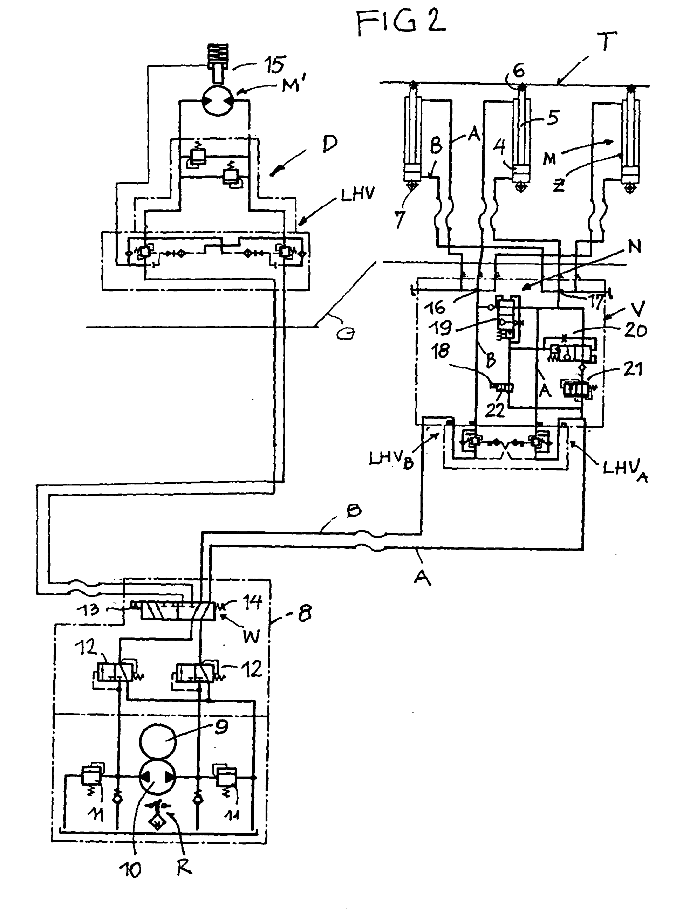

Teil der Solarpaneel-Einheit von Fig. 1 ist eine in Fig. 1 nicht gezeigte elektrohydraulische Verstellvorrichtung E, die als Blockschaltbild in Fig. 2 gezeigt ist, und die dazu dient, den Träger durch Drehen um die Achse 3 und Kippen in der Lagerung 2 dem Sonnenstand nachzuführen, und bei einem Stromausfall oder gewollt zur Abkehr von Gefahren durch Stromabschaltung in die Schutzposition S zu verstellen.

In Fig. 2 sind drei parallel geschaltete Kipp-Hydromotoren M, d. h. Differenzialzylinder Z, für denselben Träger T vorgesehen, deren Kolbenstangen 5 in den Lagerungen 6 am Träger T angreifen und in den Lagerungen 7 gegenüber dem Unterbau U abgestützt sind. Jeder Kipp-Hydromotor ist doppeltwirkend. Die kolbenseitige Kammer und die kolbenstangenseitige Kammer jedes Kipp-Hydromotors M ist über eine Arbeitsleitung A, B mit einem Motorpumpenaggregat 8 verbunden. Direkt an den Kipp-Hydromotoren oder (wie gezeigt) in direkter Nachbarschaft zu diesen ist ein Ventilblock V in den Arbeitsleitungen A, B enthalten, in welchem eine durch einen Überwachungsmagneten 18 überwachte Nachsaugverbindung N integriert ist, die dazu dient, den Träger T aus der jeweils eingestellten Kipp-Lage in die Schutzposition S zu überführen. In dem Ventilblock V sind die Arbeitsleitungen A, B jeweils getrennt an Knoten 16, 17 zusammengeführt, und dann über Sperr- oder Lasthalteventile LHV_{A}, LHV_{B} mit einem Richtungswegeschieber W im Motorpumpenaggregat 8 verbunden. Der Richtungswegeschieber W ist ein 2/4-Wegeschieber, der durch die Kraft einer Feder 14 in der gezeigten Schaltstellung gehalten wird, in der die Verbindung zum Ventilblock V hergestellt ist, und der durch Betätigung eines Schaltmagneten 13 in eine andere Arbeitsstellung umschaltbar ist, in der die Drehsteuerung D gesteuert wird.

In der Drehsteuerung D ist z. B. ein doppeltwirkender Drehhydromotor M' zum Drehen der Säule 1 vorgesehen, dem eine durch Federkraft einrückbare und hydraulisch ausrückbare Bremse 15 zum Festlegen in der jeweils eingestellten Drehposition zugeordnet sein kann, sowie in jeder Arbeitsleitung angeordnete Sperr- oder Lasthalteventile, die bei Nichtbetätigung der Drehsteuerung D den Drehhydromotor M' hydraulisch blockieren und die Lastdrücke halten.

In dem Motorpumpenaggregat A, das in erheblicher Entfernung von der Drehsteuerung D und den Kipp-Hydromotoren M und dem Ventilblock V angeordnet sein kann, ist ein drehrichtungsumkehrbarer Elektromotor 9 enthalten, der eine in beiden Drehrichtungen fördernde Pumpe 10 treibt. Die Systemdrücke werden in jeder Förderrichtung der Pumpe 10 durch ein Systemdruckbegrenzungsventil 11 überwacht, während druckvorgesteuerte 3/2-Wegeventile 12 die jeweilige Verbindung von der Pumpe 10 zu einer Arbeitsleitung A oder B bzw. einer Arbeitsleitung B oder A mit einem Tank steuern.

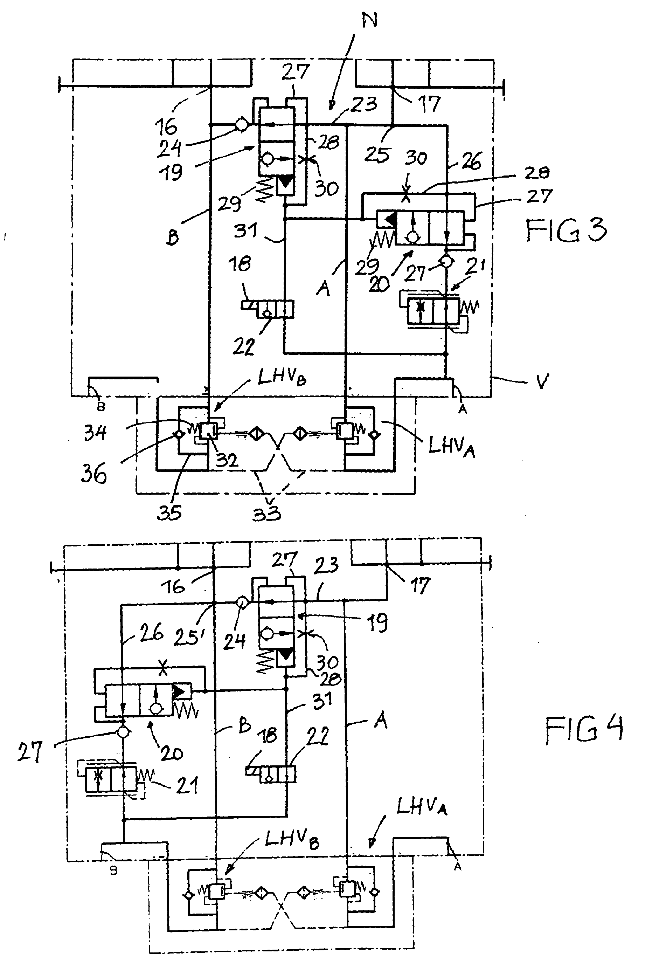

Im Ventilblock V sind zwei druckvorgesteuerte 2/2-Wegesitzventile 19, 20, ein 2/2-Wege-Magnetsitzventil 22, dessen Aktuatormagnet ein Überwachungsmagnet 18 der Nachsaugverbindung N ist, und, als Option, ein Senkbremsventil 21 enthalten, das die Geschwindigkeit begrenzt, mit der sich der Träger T aus einer Einstellposition selbsttätig in die Schutzposition S bewegt. Die Ausführungsform der Kipp-Steuerung von Fig. 2 wird im Detail anhand von Fig. 3 erläutert.

Zwischen den in Fig. 3 von den Knoten 16, 17 zu den Sperr- oder Lasthalteventilen LHV_{B}, LHV_{A} führenden Arbeitsleitungen A, B ist ein Nachsaugweg 23 vorgesehen, von dem an einem Knoten 25 eine Ablassleitung 26 abgeht, die über das 2/2-Wegesitzventil 20, ein in Strömungsrichtung zum Knoten 17 sperrendes Rückschlagventil 27 und das ggf. vorgesehene Senkbremsventil 21 das Sperr- oder Lasthalteventil LHV_{A} umgeht und direkt in den Zweig der Arbeitsleitung A zum Motorpumpenaggregat 8 mündet.

Das 2/2-Wegesitzventil 20 ist aus der Ablassleitung 26 druckvorgesteuert, und zwar über eine Vorsteuerleitung 27 zu einer Aufsteuerseite eines nicht gezeigten Ventilschließglieds und eine Vorsteuerleitung 28 zu einer Schließsteuerseite. In der Vorsteuerleitung 28 ist eine Drossel 30 enthalten. Das Schließglied wird ferner durch eine schematisch angedeutete Schließfeder 29 in Schließrichtung beaufschlagt. Analog ist das 2/2-Wegesitzventil 19 mit Druckvorsteuerung im Nachsaugweg 23 zwischen dem Knoten 25 und dem Knoten 16 angeordnet, mit entsprechenden Vorsteuerleitungen 27 und 28 sowie der in der Vorsteuerleitung 28 enthaltenen Drossel 30.

Stromab des 2/2-Wegesitzventils 19 ist ein in Rückströmrichtung zum Knoten 25 sperrendes Rückschlagventil 24 vorgesehen. Die Rückschlagventile 27, 24 könnten auch auf den anderen Seiten der Wegesitzventile angeordnet sein. Der schließseitige Vorsteuerbereich der beiden Wegesitzventile 19, 20 ist zusammengefasst und über einen Entlastungszweig 31 nur für Steuerhydraulikmedium stromab des Senkbremsventils 21 an die Ablassleitung 26 angeschlossen. In diesem Entlastungszweig 31 befindet sich das 2/2-Wege-Magnetsitzventil 22, dessen Betätigungsmagnet der Überwachungsmagnet 18 ist. Bei Bestromung des Überwachungsmagneten 18 hält das Magnetsitzventil 22 die Absperrstellung, während es bei Stromabschaltung oder Stromausfall die gezeigte Durchgangsstellung einnimmt.

In den beiden druckvorgesteuerten Wegesitzventilen 19, 20 können die an der Aufsteuerseite und der Schließsteuerseite vom jeweiligen Vorsteuerdruck beaufschlagbaren Druckflächen verschieden groß sein. Ferner sind die Drosseln 30 kleiner als die Durchgangsgröße des Magnetsitzventils 22 in dessen Durchgangsstellung. Beispielsweise entspricht die Durchgangsgröße jeder Drossel 30 annähernd einer 0,4 mm Bohrung, während die Durchgangsgröße des Magnetsitzventils 22 einer Bohrung mit einer Größe von etwa 0,7 bis 0,8 mm entspricht.

Jedes Sperr- oder Lasthalteventil LHV_{B}, LHV_{A} wird durch die Kraft einer Feder 34 in einer Lasthaltestellung gehalten (beispielsweise begrenzt auf 180 bar Lastdruck) wobei die Feder 34 an einem Schließglied 32 angreift. Das Schließglied 32 wird jeweils aus der anderen Arbeitsleitung über eine Vorsteuerleitung 33 aufgesteuert. Das heisst, das Schließglied 32 des Sperr- oder Lasthalteventils LHV_{A}, LHV_{B} wird über die Vorsteuerleitung 33 aus der Arbeitsleitung A aufgesteuert, während das Schließglied 32 des Sperr- oder Lasthalteventils LHV_{A} über die Vorsteuerleitung 33 aus der Arbeitsleitung B aufgesteuert wird. Zusätzlich wird jedes Sperr- oder Lasthalteventil durch eine Leitungsschlaufe 35 umgangen, in der sich ein Rückschlagventil 36 befindet, das in Strömungsrichtung zum jeweiligen Knoten 16, 17 öffnet und in der Gegenrichtung sperrt.

### Funktion zu den Fig. 1, 2 und 3:

Solange der Strom nicht gewollt abgeschaltet wird, oder nicht aufgrund eines Stromausfalls ausbleibt, und die Verstellvorrichtung E im Normalbetrieb (Standby- oder Aktivbetrieb) ist, wird der Überwachungsmagnet 18 bestromt. Dieser Überwachungsmagnet 18 hat beispielsweise eine Leistungsaufnahme von nur etwa 1,5 bis 6 Watt, vorzugsweise etwa 3 Watt. Bei bestromtem Überwachungsmagneten 18 befindet sich das Magnetsitzventil 22 in der Absperrstellung und steht der Entlastungszweig 31 unter dem Vorsteuerdruck, so dass beide Wegesitzventile 19, 20 ihre Absperrstellung halten. Der Nachsaugweg 23 ist unterbrochen, wie auch die Verbindung in der Ablassleitung 26 vom Knoten 25 zum Abschnitt der Arbeitsleitung A zum Motorpumpenaggregat 8. Der Lastdruck an den Knoten 16, 17 wird von den Sperr- oder Lasthalteventilen LHV_{B}, LHV_{A} gehalten. Beide befinden sich in der Sperrstellung. Der Schaltmagnet 13 des Richtungswegeschiebers W ist nicht bestromt, so dass dieser dank der Ventilfeder 14 die in Fig. 2 gezeigte Schaltstellung einnimmt und eine Verbindung der Arbeitsleitungsabschnitte A, B über die druckvorgesteuerten 3/2-Wegeventile 12 zum Tank vorliegt. Zwischen den 3/2-Wegeventilen 12, den Systemdruckbegrenzungsventilen 11 und der Pumpe 10 herrscht ggf. ein angehobener Grunddruck. Wird ein Drehverstellschritt in der Drehsteuerung D benötigt, dann wird der Schaltmagnet 13 bestromt und die Pumpe 10 in der jeweilig erforderlichen Drehrichtung angetrieben, um die Drehnachführung durchzuführen. Danach wird der Schaltmagnet 13 entregt. Der Richtungswegeschieber W nimmt wieder die in Fig. 2 gezeigte Stellung ein.

Wird ein Kipp-Nachstellungsschritt benötigt, beispielsweise ausgelöst durch einen Neigungssensor, Stromausbeutensensor und/oder Zeitschalter R (Fig. 2), dann wird die Pumpe 10 in der jeweils für den Schritt erforderlichen Drehrichtung angetrieben, beispielsweise um die Kolbenstangen 5 der Kipp-Hydromotoren M auszufahren, d. h., um am Knoten 17 Druck aufzubauen und über den Knoten 16 Hydraulikmedium abströmen zu lassen. Der Pumpenförderdruck verstellt das rechte druckvorgesteuerte 3/2-Wegeventil 12 im Motorpumpenaggregat 8 in die Durchgangsstellung, so dass das Hydraulikmedium über das in Fig. 3 rechte Rückschlagventil des Sperr- oder Lasthalteventils LHV_{A} zum Knoten 17 und über diesen in die kolbenseitige Kammern strömt. Gleichzeitig wird aus den kolbenstangenseitigen Kammern ausgeschobenes Hydraulikmedium über den Knoten 16 und das über die Vorsteuerleitung 33 aus der Arbeitsleitung A aufgesteuerte, linke Sperr- bzw. Lasthalteventil LHV_{B}, den Richtungswegeschieber W und das in Fig. 2 linke 3/2-Wegeventil 12 zum Tank abgelassen, bis die neue gewünschte Position des Trägers T erreicht ist. Dann wird der Antrieb still gesetzt, und werden die Kipp-Hydromotoren M hydraulisch blockiert. Der Nachsaugweg 23 bleibt durch das Wegesitzventil 19 blockiert, wie auch die Ablassleitung 26 durch das Wegesitzventil 20.

Wird ein Verstellschritt in der entgegengesetzten Richtung für die Kipp-Hydromotoren M erforderlich, ergibt sich der umgekehrte Ablauf.

Im Fall einer Gefahr, z. B. durch starken Wind, wird die Stromzufuhr bewusst abgeschaltet. Die Konsequenz dieser Stromabschaltung ist die Gleiche wie bei einem durch andere Gründe bedingten Stromausfall. Der Überwachungsmagnet 18 wird entregt, so dass das Wegesitzventil 22 in die Durchgangsstellung geht. Der Schaltmagnet 13 ist oder wird entregt. Der Elektromotor 9 steht. Der Lastdruck des Trägers T wirkt in Einziehrichtung der Kolbenstangen in die Differenzialzylinder Z, d. h., der Druck in den kolbenseitigen Kammern (Knoten 17) ist höher als der Druck in den kolbenstangenseitigen Kammern (Knoten 16). Dieser erhöhte Druck steuert dank der Drossel 30 und dem nun druckentlasteten Entlastungszweig 31 die Wegesitzventile 19, 20 in ihre Durchgangsstellungen, da der Vorsteuerdruck an der Aufsteuerseite jeweils höher ist als an der Schließsteuerseite. Vom Knoten 17 strömt Hydraulikmedium durch den Nachsaugweg 23 in die kolbenstangenseitigen Kammern, während gleichzeitig aufgrund der unterschiedlichen Volumen zwischen den kolbenseitigen und den kolbenstangenseitigen Kammern ein Teil des Hydraulikmediums über die Ablassleitung 26, das dann öffnende Rückschlagventil 27 und das ggf. vorgesehene Senkbremsventil 21 in den zum Motorpumpenaggregat 8 führenden Abschnitt der Arbeitsleitung A abströmt, und im Motorpumpenaggregat 8 über das rechte 3/2-Wegeventil zum Tank gelangt. Die Senkgeschwindigkeit des Trägers T wird durch das Senkbremsventil 21 begrenzt bzw. auf einen konstanten Wert geregelt, unabhängig davon, ob der Lastdruck variiert oder nicht. Der Träger T erreicht die Schutzposition S, die beispielsweise durch nicht gezeigte Anschläge definiert sein kann, oder durch den Anschlag der Kolben 4 der Differenzialzylinder Z. Dabei liegen sowohl in den kolbenseitigen als auch in kolbenstangenseitigen Kammern und im Ventilblock V einwandfrei hydraulische Verhältnisse für den später wieder aufzunehmenden Normalbetrieb der elektrohydraulischen Verstellvorrichtung E vor, da kein Hydraulikmedium über langen Strömungswege aus dem Motorpumpenaggregat angesaugt zu werden brauchte.

Sobald bei in der Schutzposition S befindlichem Träger T der Normalbetrieb, z. B. am nächsten Tag, wieder aufgenommen wird, geht das 2/2-Magnetsitzventil 22 bei Bestromung des Überwachungsmagneten 18 in die Absperrstellung, so dass auch die 2/2-Wegesitzventile 19, 20 ihre Absperrstellungen einnehmen.

Die in Fig. 4 gezeigte Detailvariante unterscheidet sich von der von Fig. 3 dadurch, dass die Ablassleitung 26 vom Knoten 25' unterhalb des Knotens 16 unter Umgehung des in Fig. 4 linken Sperr- oder Lasthalteventils LHV_{B} an den Abschnitt der Arbeitsleitung B zum Motorpumpenaggregat 8 angeschlossen ist, wie auch der Entlastungszweig 31, in dem sich das Magnetsitzventil 22 mit dem Überwachungsmagneten 18 befindet. Die Funktionsweise ist gleich.

Falls die Beaufschlagungsflächen des jeweiligen Ventilschließgliedes in den 2/2-Wegesitzventilen 19, 20 unterschiedlich groß gewählt sind, kann ein nachdrücklicheres rein druckabhängiges Umschalten aus der Durchgangs- in die Absperrstellung bzw. umgekehrt gesteuert werden.

Die Leistungsaufnahme des Überwachungsmagneten 18 beträgt, wie erwähnt, nur etwa 3 Watt, während die Leistungsaufnahme des Schaltmagneten 13 im Motorpumpenaggregat bei 8 Watt liegen kann. Die Förderleistung der Pumpe 10 kann etwa 3,5 l/min betragen, wobei der Systemdruck auf 150 begrenzt sein kann. Die Nenndrehzahl des Elektromotors 9 kann 1360 U/min betragen, bei einer Leistungsaufnahme von 0,75 KW. Das Volumen des Tanks braucht nur ca. 5 Liter zu betragen.

Der Ventilblock V ist eine vorfertigbare Einheit, die entweder direkt an die Kipp-Hydromotoren M angebaut wird, oder an eine dafür vorgesehene, möglichst nahe bei den Kipp-Hydromotoren M liegende Montageschnittstelle G. Die Abschnitte der Arbeitsleitungen A, B zwischen dem Ventilblock V und dem Motorpumpenaggregat 8 können praktisch beliebig lang sein.

In der gezeigten Ausführungsform sind die mehreren Differenzialzylinder Z für die Kipp-Verstellung des Trägers T parallel geschaltet und an eine gemeinsame Kipp-Steuerung angeschlossen. Bei einer nicht gezeigten Variante könnte jedoch jeder der mehreren vorgesehenen Differenzialzylinder Z eine eigene Kipp-Steuerung entsprechend der von Fig. 3 oder Fig. 4 aufweisen.

## Patentansprüche

1. Elektrohydraulische Verstellvorrichtung (E) für einen Solarpaneel-Träger (T), der zumindest zur Sonnenstands-Nachführung an einem Unterbau (1, U) mittels doppelt wirkender Hydromotoren (M, M') drehbar und kippbar und derart angeordnet ist, dass der Träger (T) ohne Einflussnahme der Hydromotoren selbsttätig zu einer Schutzposition (S) strebt, mit Hydromotoren (M, M') und einem an diese angeschlossenen Motorpumpenaggregat (8) und einem Ventilkomponenten zumindest für eine Kippsteuerung aufweisenden Steuerkreis, der in Arbeitsleitungen (A, B) des Kipp-Hydromotors (M) druckgesteuerte Sperr- oder Lasthalteventile (LHV_{A}, LHV_{B}) enthält, **dadurch gekennzeichnet, dass** zum selbsttätigen Einstellen der Schutzposition (S) des Trägers an der den Sperr- oder Lasthalteventilen (LHV_{A}, LHV_{B}) zugewandten Seite des Kipp-Hydromotors (M) eine bei Stromabschaltung und/oder Stromausfall druckabhängig aufsteuerbare, durch einen Überwachungsmagneten (18) überwachte Nachsaugverbindung (N) vorgesehen ist, dass die Arbeitsleitungen (A, B) zwischen dem Kipp-Hydromotor (M) und den Sperr- und Lasthalteventilen (LHV_{A}, LHV_{B}) über einen Nachsaugweg (23) miteinander verbunden sind, von dem eine die Sperr- oder Lasthalteventile umgehende Ablassleitung (26) abzweigt, dass im Nachsaugweg (23) und in der Ablassleitung (26) je ein aus dem Nachsaugweg (23) bzw. der Ablassleitung (26) druckvorgesteuertes und zur Verstellvorrichtung (E) gehörendes Wegesitzventil (19, 20) angeordnet ist, und dass ein Vorsteuerkreis der beiden Wegesitzventile (19, 20) an die Ablassleitung (26) über einen Entlastungszweig (31) angeschlossen ist, in dem ein zur Verstellvorrichtung (E) gehörendes Magnetsitzventil (22) mit dem Überwachungsmagneten (18) als Aktuator angeordnet ist.

2. Elektrohydraulische Verstellvorrichtung nach Anspruch 1, **dadurch gekennzeichnet, dass** der Überwachungsmagnet (18) eine Leistungsaufnahme zwischen nur etwa 1,5 bis 6,0 Watt, vorzugsweise etwa 3 Watt, besitzt, und im Normalbetrieb der Verstellvorrichtung permanent bestromt ist.

3. Elektrohydraulische Verstellvorrichtung gemäß Anspruch 1, **dadurch gekennzeichnet, dass** der Kipp-Hydromotor (M) ein Differenzialzylinder (Z) ist, dessen Kolbenstange (5), in der Schutzposition (S) bis auf Anschlag eingefahren ist, dass die Nachsaugverbindung (N) in Nachsaugrichtung von einer kolbenseitigen Kammer des Kipp-Hydromotors (M) zu einer kolbenstangenseitigen Kammer freigebar ist, dass die Ablassleitung (26) das Sperr- oder Lasthalteventil entweder der an die kolbenseitige Kammer oder der an die kolbenstangenseitige Kammer angeschlossenen Arbeitsleitung (A, B) umgeht und zwischen dem Sperr- oder Lasthalteventil und dem Motorpumpenaggregat (8), an diese Arbeitsleitung (A oder B) angeschlossen ist.

4. Elektrohydraulische Verstellvorrichtung nach Anspruch 1, **dadurch gekennzeichnet, dass** der Nachsaugweg (23) und die Ablassleitung (26) je ein zur Kolbenseitigen Kammer des Kipp-Hydromotors (M) sperrendes Rückschlagventil (24, 24') enthalten.

5. Elektrohydraulische Verstellvorrichtung nach Anspruch 1, **dadurch gekennzeichnet, dass** in der Ablassleitung (26) ein Senkbremsventil (21) installiert ist.

6. Elektrohydraulische Verstellvorrichtung nach wenigstens einem der vorhergehenden Ansprüche mit einem Ventilblock (V), **dadurch gekennzeichnet, dass** zumindest die Nachsaugverbindung (N) und der Überwachungsmagnet (18) in dem auch die Sperr- oder Lasthalteventile enthaltenden Ventilblock (V) angeordnet sind, der entweder direkt am Kipp-Hydromotor (M) oder unmittelbar in der Nachbarschaft des Kipp-Hydromotors (M) montiert ist.

7. Elektrohydraulische Verstellvorrichtung nach Anspruch 1, **dadurch gekennzeichnet, dass** jedes Wegesitzventil (19, 20) ein vom Vorsteuerdruck aus dem Nachsaugweg (23) bzw. der Ablassleitung (26) in Öffnungsrichtung auf einer Aufsteuerseite und in Schließrichtung auf einer Schließsteuerseite auf von einander verschieden großen Beaufschlagungsflächen beaufschlagtes Schließglied enthält, vorzugsweise mit einer in Schließrichtung wirkenden Ventilfeder (29), dass zwischen dem Nachsaugweg (23) bzw. der Ablassleitung (26) und der Schließsteuerseite jedes Wegesitzventils (19, 20) eine Drossel (30) installiert ist, dass die Schließsteuerseiten an das Magnetsitzventil (22) über einen Entlastungszweig (31) angeschlossen sind, der zu einer Arbeitsleitung (A oder B) zum Motorpumpenaggregat führt, und dass die Durchlassgröße des Magnetsitzventils (22) in der Durchgangsstellung größer ist als die Durchgangsgröße der jeweiligen Drossel (30).

8. Elektrohydraulische Verstellvorrichtung gemäß Anspruch 7, **dadurch gekennzeichnet, dass** das die Durchgangsgröße der Drossel (30) einer Bohrung von etwa 0,4 mm und die Durchgangsgröße des Magnetsitzventils (22) einer Bohrung von etwa 0,7 bis 0,8 mm entsprechen.

9. Elektrohydraulische Verstellvorrichtung gemäß Anspruch 1, **dadurch gekennzeichnet, dass** das Motorpumpenaggregat (8) einen drehrichtungsumkehrbaren Motor (9) und eine in beiden Drehrichtungen fördernde Pumpe (10), ein Paar druckvorgesteuerter 2/3-Wegeventile (12) und ein Paar SystemdruckBegrenzungsventile (11) sowie einen magnetbetätigten Richtungssteuerschieber (W) aufweist, von welchem die Arbeitsleitungen (A, B) zur Kippsteuerung und weitere Arbeitsleitungen zu einer Drehsteuerung (D) des Trägers (T) verlaufen, und dass die Leistungsaufnahme des Magneten (13) des Richtungssteuerschiebers (W) zwischen etwa fünf bis zehn Watt, vorzugsweise etwa acht Watt beträgt.

10. Elektrohydraulische Verstellvorrichtung nach wenigstens einem der vorhergehenden Ansprüche, **dadurch gekennzeichnet, dass** mehrere parallel geschaltete Kipp-Hydromotoren (M) vorgesehen sind, die entweder an eine gemeinsame Kippsteuerung angeschlossen sind oder eigene Kippsteuerungen aufweisen.

## Claims

1. Electrohydraulic adjusting device (E) for a solar panel carrier (T) which, at least for tracking the position of the sun, is rotatable and tiltable at a sub-structure (1, U) by means of double-actuated hydraulic rotation and tilt motors (M, M') and is arranged such that the carrier (T) tends to automatically reach a protected position (S) without influence by the hydraulic motors (M, M1), comprising a motor pump aggregate (8) connected to the hydraulic motors (M, M') and a control circuit comprising valve components at least for a carrier tilt control, the control circuit containing pressure controlled blocking valves or load holding valves (LHV_{A}, LHV_{B}) in working lines (A, B) of the hydraulic tilt motor (M), **characterised in that** for automatically adjusting the protected position (S) of the carrier (T) a suction line (N) is provided at the side of the hydraulic tilt motor (M) facing to the blocking valves or load holding valves (LHV_{A}, LHV_{B}), that the suction line (N) is adapted to be controlled open only pressure dependently in case of an electric power switching off condition and/or an electrical power breakdown, that the suction line (N) is safeguarded by a monitoring solenoid (18), that the working lines (A, B) are interconnected with each other between the hydraulic tilt motor (M) and the blocking valves or load holding valves (LHV_{A}, LHV_{B}) by a suction path (23), that a discharge line (26) branching off from the suction path (23) is deviating the blocking valves or load holding valves, that a respective pilot pressure operated multi-way seat valve (19, 20) belonging to the adjusting device (E) is arranged in the suction path (23) and in the discharge line (26), the multi-way seat valves (19, 20) being pilot pressure operated with pilot pressures taken from the suction path (23) or the discharge line (26), that a pilot circuit of both multi-way seat valves (19, 20) is connected by an unloading branch (31) to the discharge line (26), and that a solenoid seat valve (22) belonging to the adjusting device (E) is arranged in the unloading branch (31), the solenoid seat valve (22) having the monitoring solenoid (18) as a valve actuator.

2. Electrohydraulic adjusting device according to claim 1, **characterised in that** the monitoring solenoid (18) has a power consumption between only about 1.5 volt to 6.0 volt, preferably about 3 volt, and that the monitoring solenoid (18) is permanently energised during normal operation of the adjusting device (E).

3. Electrohydraulic adjusting device according to claim 1, **characterised in that** the hydraulic tilt motor (M) is a differential cylinder (Z), the piston rod (5) of which in the protection position (S) is retracted to a mechanically blocked position, that the suction line (N) is opened in suction direction from a piston side chamber to a piston rod side chamber, that the discharge line (26) deviates the blocking valve or load holding valve in the working line (A, B) extending either to the piston side chamber or to the piston rod side chamber and is connected to the respective working line (A or B) between the blocking valve or load holding valve and the motor pump aggregate (8).

4. Electrohydraulic adjusting device according to claim 1, **characterised in that** the suction path (23) and the discharge line (26) respectively contain a check valve (24, 24') blocking in flow direction to the piston side chamber of the hydraulic tilt motor (M).

5. Electrohydraulic adjusting device according to claim 1, **characterised in that** a lowering speed limiting valve (21) is installed in the discharge line (26).

6. Electrohydraulic adjusting device according to at least one of the preceding claims, including a valve block (V) **characterised in that** at least the suction line (N) and the monitoring solenoid (18) are provided in the valve block (V) which contains the blocking valves or load holding valves, and that the valve block (V) is mounted either directly at or in immediate vicinity of the hydraulic tilt motor (M).

7. Electrohydraulic adjusting device according to claim 1, **characterised in that** each multi-way seat valve (19, 20) contains a closure member which is loaded in opening direction at an opening control side and in closing direction at a closing control side on pressure receiving surfaces of different sizes by pilot pressure taken from the suction path (23) or the discharge line (26), that the closure member, preferably, is urged by a valve spring (29) in closing direction, that an aperture (30) is installed between the suction path (23) and the discharge line (26), respectively, and the closing control side of each multi-way seat valve (19, 20), that the closing control sides of both multi-way seat valves (19, 20) are connected via an unloading branch (31) to the solenoid seat valve (22), which unloading branch (31) leads to one working line (A or B) extending to the motor pump aggregate (8), and that a cross-section of the switched-open solenoid seat valve (22) is larger than the size of the respective aperture (30).

8. Electrohydraulic adjusting device according to claim 7, **characterised in that** the size of the aperture (30) corresponds to a bore of a diameter of about 0.4 mm, and that the cross-section of the switched-open solenoid seat valve (22) corresponds to a bore of a diameter of about 0.7 mm to 0.8 mm.

9. Electrohydraulic adjusting device according to claim 1, **characterised in that** the motor pump aggregate (8) comprises a reversible electric motor (9) and a pump (10) which discharges in both senses of rotation, a pair of pilot pressure operated 2/3-way valves (12), a pair of system pressure limiting valves (11) and a solenoid actuated directional control slider valve (W), that the working lines (A, B) extend to a carrier tilt control circuit (K) of the hydraulic tilt motor (M), that further working lines extend to a carrier rotation control circuit (D), and that the power consumption of the solenoid (13) of the directional control slider valve (W) amounts to about 5 to 10 volt, preferably to about 8 volt.

10. Electrohydraulic adjusting device according to at least one of the preceding claims, **characterised in that** several hydraulic tilt motors (M) are provided, that the hydraulic tilt motors (M) are switched in parallel, and that the hydraulic tilt motors (M) either are connected to a common carrier tilt control circuit (K) or have separate carrier tilt control circuits (K).

## Revendications

1. Dispositif de réglage (E) électrohydraulique pour un support de panneau solaire (T), qui est monté pivotant et basculant sur un châssis (1, U) à l'aide de deux moteurs hydrauliques (M, M') à double effet au moins pour orientation sur la position du soleil, et de façon telle que le support (T) tende automatiquement vers une position de protection (S) sans l'intervention des moteurs hydrauliques comprenant des moteurs hydrauliques (M, M') et un groupe motopompe (8) raccordé à ceux-ci, ainsi qu'un circuit de commande qui présente des composants à vanne, au moins pour une commande de basculement, et qui comporte des vannes d'arrêt ou de maintien de charge (LHV_{A}, LHV_{B}) commandées par pression dans les conduites de travail (A, B) du moteur hydraulique de basculement (M), **caractérisé en ce que,** pour le réglage automatique de la position de protection (S) du support, il est prévu sur le côté du moteur hydraulique de basculement (M) tourné vers les vannes d'arrêt ou de maintien de charge (LHV_{A}, LHV_{B}) une liaison d'aspiration complémentaire (N) qui peut être commandée en ouverture en fonction de la pression en cas de coupure de courant et/ou de panne de courant, et qui est surveillée par un aimant de surveillance (18), que les conduites de travail (A, B) entre le moteur hydraulique de basculement (M) et les vannes d'arrêt et de maintien de charge (LHV_{A}, LHV_{B}) sont reliées entre elles par une voie d'aspiration aval (23), d'où bifurque une conduite d'évacuation (26) contournant les vannes d'arrêt ou de maintien de charge, que dans la voie d'aspiration aval (23) et dans la conduite d'évacuation (26) il est prévu une vanne de distribution à siège (19, 20) à chaque fois commandée par pression depuis la voie d'aspiration aval (23) ou la conduite d'évacuation (26) et qui appartient au dispositif de réglage (E), et qu'un circuit de commande pilote des deux vannes de distribution à siège (19, 20) est connecté à la conduite d'évacuation (26) par l'intermédiaire d'une branche de décharge (31), dans laquelle est placée une électrovanne à siège (22) qui appartient au dispositif de réglage (E) avec l'aimant de surveillance (18) en tant qu'actionneur.

2. Dispositif de réglage électrohydraulique selon la revendication 1, **caractérisé en ce que** l'aimant de surveillance (18) a une consommation de puissance comprise seulement entre environ 1,5 et 6,0 watts, de préférence d'environ 3 watts, et, en service normal du dispositif de réglage, est alimenté en courant en permanence.

3. Dispositif de réglage électrohydraulique selon la revendication 1, **caractérisé en ce que** le moteur hydraulique de basculement (M) est un vérin différentiel (Z) dont la tige de piston (5) est rentrée jusqu'à la butée dans la position de protection (S), que la liaison d'aspiration aval (N) peut être libérée dans le sens de l'aspiration aval depuis une chambre côté piston du moteur hydraulique de basculement (M) vers une chambre côté tige de piston, que la conduite d'évacuation (26) contourne la vanne d'arrêt ou de maintien de charge, soit de la conduite de travail (A, B) raccordée à la chambre côté piston, soit de la conduite de travail raccordée à la chambre côté tige de piston, et est raccordée à cette conduite de travail (A ou B) entre la vanne d'arrêt ou de maintien de charge et le groupe motopompe (8).

4. Dispositif de réglage électrohydraulique selon la revendication 1, **caractérisé en ce que** la voie d'aspiration aval (23) et la conduite d'évacuation (26) contiennent chacune une vanne anti-retour (24, 24') bloquant en direction de la chambre côté piston du moteur hydraulique de basculement (M).

5. Dispositif de réglage électrohydraulique selon la revendication 1, **caractérisé en ce qu'**une vanne de freinage d'abaissement (21) est installée dans la conduite d'évacuation (26).

6. Dispositif de réglage électrohydraulique selon au moins une des revendications précédentes, comprenant un bloc d'appareils de distribution et de régulation (V), **caractérisé en ce qu'**au moins la liaison d'aspiration aval (N) et l'aimant de surveillance (18) sont disposés dans le bloc d'appareils (V) qui contient également les vannes d'arrêt ou de maintien de charge et qui est monté soit directement sur le moteur hydraulique de basculement (M), soit dans le voisinage immédiat du moteur hydraulique de basculement (M).

7. Dispositif de réglage électrohydraulique selon la revendication 1, **caractérisé en ce que** chaque vanne de distribution à siège (19, 20) contient un organe de fermeture, de préférence muni d'un ressort de vanne (29), agissant dans la direction de fermeture, sollicité par la pression de commande pilote provenant de la voie d'aspiration aval (23) ou de la conduite d'évacuation (26), dans la direction d'ouverture sur un côté de commande en ouverture et dans la direction de fermeture sur un côté de commande en fermeture sur des surfaces de sollicitation ayant des dimensions différentes, qu'un étranglement (30) est installé entre la voie d'aspiration aval (23) ou la conduite d'évacuation (26) et le côté de commande en fermeture de chaque vanne de distribution à siège (19, 20), que les côtés de commande en fermeture sont raccordés à l'électrovanne à siège (22) par l'intermédiaire d'une branche de décharge (31), laquelle mène à une conduite de travail (A ou B) en direction du groupe motopompe, et que la section de passage de l'électrovanne à siège (22) dans la position de passage est plus grande que la section de passage de l'étranglement (30) respectif.

8. Dispositif de réglage électrohydraulique selon la revendication 7, **caractérisé en ce que** la section de passage de l'étranglement (30) correspond à un perçage d'environ 0,4 mm et la section de passage de l'électrovanne à siège (22) correspond à un alésage d'environ 0,7 à 0,8 mm.

9. Dispositif de réglage électrohydraulique selon la revendication 1, **caractérisé en ce que** le groupe motopompe (8) présente un moteur (9) à sens de rotation réversible et une pompe (10) à refoulement dans les deux sens de rotation, une paire de vannes de distribution 2/3 (12) à commande par pression pilote et une paire de vannes de limitation de pression de système (11), ainsi qu'une vanne-pilote de direction (W) à actionnement magnétique, à partir de laquelle s'étendent les conduites de travail (A, B) vers la commande de basculement et d'autres conduites de travail mènent vers une commande de rotation (D) du support (T), et que la consommation de puissance de l'aimant (13) de la vanne-pilote de direction (W) est comprise entre environ 5 et 10 watts et est de préférence d'environ 8 watts.

10. Dispositif de réglage électrohydraulique selon au moins une des revendications précédentes, **caractérisé en ce qu'**il est prévu plusieurs moteurs hydrauliques de basculement (M) montés en parallèle, qui sont soit connectés à une commande de basculement commune soit munis chacun de leur propre commande de basculement.
